# FASCICULE DE BREVET EUROPEEN

(11) **EP 2 711 299 B1**
(45) Date de publication et mention de la délivrance du brevet: **09.03.2016**
(21) Numéro de dépôt: 13185352.5
(22) Date de dépôt: 20.09.2013
(51) Int. Cl.: B23P 15/26, F28D 15/02, B64G 1/50

(54) **Structure thermomécanique adaptée pour un environnement spatial**
Thermomechanische Struktur für den Weltraum
Thermomechanical structure suitable for a space environment

(30) Priorité: 21.09.2012 FR 1202503
(43) Date de publication de la demande: 26.03.2014
(73) Titulaire: Thales, 92200 Neuilly Sur Seine (FR)
(72) Inventeur: Chaix, Alain, 06150 Cannes-la-Bocca (FR); Legrand, Silvain, 06150 Cannes-la-Bocca (FR); Masse, Christian, 06150 Cannes-la-Bocca (FR)
(74) Mandataire: Brunelli, Gérald

(56) Documents cités:
- EP-A1- 2 388 195
- WO-A2-2012/082805
- JP-A- 2004 022 603
- US-A- 6 065 529
- US-A1- 2006 219 689

## Description

Le domaine de l'invention concerne des structures méca-thermiques adaptées pour un environnement spatial et plus particulièrement des structures méca-thermiques supportant des éléments dissipatifs d'énergie thermique nécessitant des conduits thermiques pour la régulation thermique. Toutefois, l'invention est également adaptée pour des applications terrestres.

Il est bien connu d'utiliser des structures méca-thermiques comprenant des conduits thermiques pour refroidir des dispositifs dissipatifs de chaleur. Un conduit thermique comprenant un fluide caloporteur récupère la chaleur dégagée par un dispositif dissipatif à l'une de ces extrémités, le fluide caloporteur se vaporise et se condense à l'autre extrémité cédant la chaleur à la structure méca-thermique qui la dissipe dans l'environnement ambiant, en l'espèce l'environnement ambiant est l'espace.

Selon l'art connu, les conduits thermiques sont réalisés en utilisant les mêmes matériaux que les structures méca-thermiques dans lesquelles ils sont intégrés. Une telle stratégie évite les problèmes liés aux différents coefficients de dilatation qui provoquent des zones de contraintes mécaniques qui risquent de détériorer la structure. Toutefois cette stratégie limite le choix des matériaux ce qui affecte les performances du dispositif intégrant la structure méca-thermique en terme de masse. Par ailleurs, l'élaboration des structures méca-thermiques est basée sur des méthodes de fabrication standards telles que l'usinage, le fraisage, le collage ou le vissage. Ce type d'élaboration standard nécessite un grand nombre de pièces requérant des contraintes de fabrication difficiles à respecter et complexes à assembler. Les dispositifs ainsi élaborés ont une masse élevée et sont particulièrement coûteux.

Le brevet US 6065529, qui est considéré comme l'art antérieur le plus proche et décrit les caractéristiques du préambule de la revendication 1, propose une première solution consistant à réaliser un canal dans la structure méca-thermique destinée à recevoir un conduit thermique. Les dimensions intérieures du canal sont supérieures aux dimensions extérieures du conduit thermique de manière à laisser un espace entre la paroi interne du canal et la paroi externe du conduit thermique, l'espace étant rempli d'un fluide ou d'une poudre métallique conducteur thermique. L'espace entre la paroi interne du canal et la paroi externe du conduit permet ainsi au matériau constitutif du conduit thermique de se dilater et de se contracter sans générer de contraintes mécaniques sur les matériaux de la structure méca-thermique.

Cette première solution présente l'avantage de résoudre les problèmes liés aux différences de coefficient de dilatation thermique des matériaux ce qui permet une plus grande latitude concernant le choix des matériaux utilisés. Toutefois, cette solution ne résout pas les problèmes d'élaboration de la structure méca-thermique en terme de coût.

Dans ce contexte, l'invention propose d'élaborer une structure méca-thermique monolithique permettant d'insérer aisément des conduits thermiques.

Selon un aspect de l'invention, il est proposé une structure méca-thermique métallique monolithique adaptée pour un environnement spatial comprenant au moins un trou. Le trou comprend des parois tapissées de filaments. Avantageusement, il y a entre 30 et 100 filaments par centimètre carré.

La structure méca-thermique proposée par l'invention élimine les difficultés d'assemblage et diminue les coûts de réalisation de la structure.

Avantageusement, le pourcentage de surface recouverte des parois par des filaments est compris entre 10 et 50 %.

Avantageusement, la longueur du filament est comprise entre 0,2 et 5 mm.

Avantageusement, le diamètre des filaments est compris entre 0,3 et 0,8mm.

Avantageusement, le trou de la structure méca-thermique comprend un conduit.

Selon un aspect de l'invention, le trou de la structure méca-thermique comprend un conduit et les filaments ont une longueur supérieure à une distance séparant l'extérieur du conduit de l'intérieur du trou de manière à se courber lorsque le conduit est introduit. Avantageusement, les parois du trou sont recouvertes d'une graisse thermique.

Les filaments sont en contact avec le conduit thermique ce qui facilite le transfert d'énergie thermique du conduit vers la structure méca-thermique.

Selon un aspect de l'invention, la structure comprend de l'aluminium. L'aluminium présente un excellent compromis entre la masse et la conductivité thermique, c'est un matériau de choix pour les structures méca-thermiques destinées aux applications spatiales.

Avantageusement, le conduit thermique est un conduit thermique à ammoniaque, couramment utilisé dans les applications spatiales, le conduit thermique à ammoniaque étant très efficace thermiquement et de faible coût.

Selon un autre aspect de l'invention, il est proposé un procédé d'élaboration de la structure méca-thermique telle que décrite précédemment comprenant une première étape de fabrication de la structure méca-thermique par une méthode de fabrication additive, une deuxième étape de fabrication du conduit et une troisième étape d'insertion du conduit thermique à l'intérieur du trou de la structure méca-thermique. Avantageusement, le conduit est réalisé par une méthode d'extrusion. Avantageusement, le procédé d'élaboration de la structure méca-thermique comprend une étape d'enduction des parois du trou de la structure par de la graisse.

Ce procédé d'élaboration permet de limiter le nombre de pièce à assembler et de réduire les coûts de fabrication de la structure méca-thermique.

L'invention sera mieux comprise à l'étude de quelques modes de réalisation décrits à titre d'exemples nullement limitatifs, et illustrés par des dessins annexés sur lesquels :
- la figure 1 représente une structure méca-thermique, selon un aspect de l'invention et,
- la figure 2 représente un agrandissement de l'encadré représenté sur la figure 1.

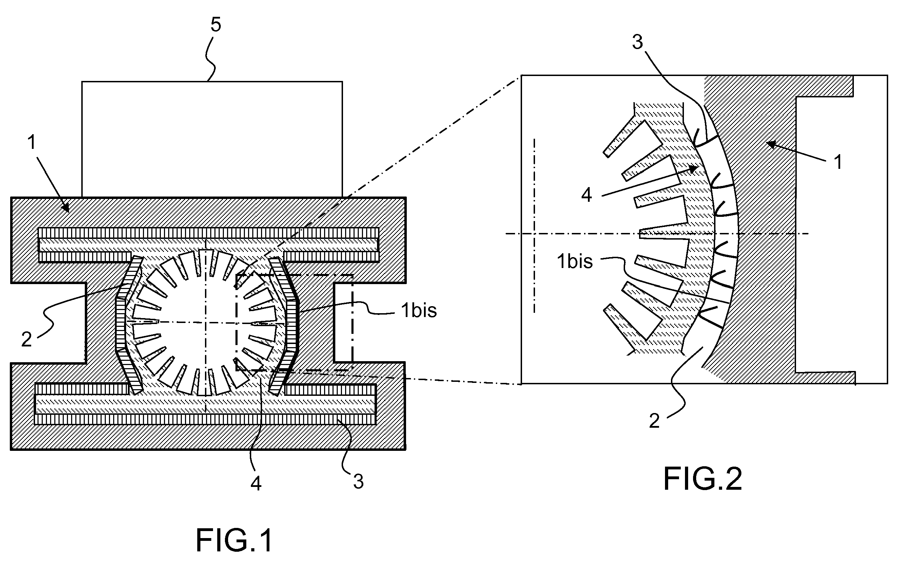

La figure 1 illustre une structure 1 méca-thermique destinée à être intégrée dans un panneau radiateur à conduits thermiques intégrés, par exemple, pour lesquels des conduits thermiques sont nécessaires pour la régulation thermique.

La structure 1 méca-thermique est constituée d'un unique matériau présentant un faible coefficient d'élasticité thermique, en l'espèce la structure 1 méca-thermique comprend de l'aluminium.

La structure 1 méca-thermique présente un trou 2, les parois 1bis du trou 2 étant tapissées de filaments 3. En l'espèce, toutes les parois 1 bis du trou 2 sont tapissées de filaments 3. Alternativement, seules certaines parois sont tapissées de filaments. L'ensemble de la structure 1 méca-thermique est monolithique, autrement dit, la structure 1 et les filaments 3 constituent une pièce unique. A l'intérieur du trou 2 de la structure 1, un conduit 4 est inséré.

En l'espèce, le trou 2 présente une forme telle que représentée sur la figure 1. Alternativement, le trou 2 présente une forme adaptée au conduit 4 qui doit y être inséré. Bien entendu, le trou 2 peut être débouchant ou borgne.

Le conduit 4 comprend de l'aluminium, ce matériau présente un faible coefficient de dilatation et une bonne conductivité thermique. Le profil du conduit 4 peut être circulaire ou denté de manière à augmenter la surface d'échange. Le conduit 4 est élaboré par une méthode standard, d'extrusion par exemple.

Avantageusement, la structure 1 méca-thermique est associée à un équipement 5 dissipatif de chaleur.

Ainsi, l'énergie thermique émise par l'équipement 5 dissipatif est transférée à la structure 1 méca-thermique associée. La chaleur transmise à la structure 1 méca-thermique est transférée via les filaments 3 au conduit thermique 4. En l'espèce, le conduit thermique 4 est un conduit thermique à ammoniaque. L'ammoniaque contenu dans le conduit thermique 4 est vaporisée à proximité de l'équipement 5 dissipatif, l'ammoniac se condense à distance de l'équipement 5 dissipatif et transfère l'énergie thermique à la structure 1 méca-thermique qui dissipe l'énergie thermique dans son environnement, en l'espèce l'espace.

La figure 2 représente un agrandissement de l'encadré de la figure 1. La figure 2 illustre une portion du trou 2, les parois 1 bis du trou 2 étant tapissées de filaments 3, permettant le transfert d'énergie thermique entre le conduit 4 et les parois du trou 2.

Avantageusement, l'écart entre les dimensions externes du conduit 4 et les dimensions internes des parois 1 bis du trou 2 est compris entre 0,1 et 2,5 mm.

Typiquement, les parois 1 bis du trou 2 comprennent entre 30 et 100 filaments par cm².

Selon un mode de réalisation de l'invention, un filament 3 de 0,3 mm de diamètre peut être séparé d'un autre filament 3 d'une distance comprise entre 0,5 à 0,8 mm dans les deux directions.

Avantageusement, le filament 3 est de forme cylindrique. Alternativement, le filament 3 est de forme parallélépipédique ou cylindrique à sa base et aplati dans la zone de contact avec le conduit thermique

Les filaments 3 présentent une longueur comprise entre 0,2 mm et 5 mm et un diamètre compris entre 0,3 et 0,8 mm.

Avantageusement, le pourcentage de surface des parois 1 bis recouvert de filament est compris entre 10 et 50 %.

Lorsque le conduit 4 est inséré à l'intérieur du trou 2, les filaments 3 se recourbent sur la moitié de leur longueur ce qui augmente la surface d'échange thermique entre le conduit 4 et la structure 1 via les filaments 3. Avantageusement, les parois 1bis du trou 2 tapissées de filaments 3 sont recouvertes d'une graisse thermique augmentant encore la surface d'échange thermique entre le conduit 4 et la structure 1.

Selon un autre aspect de l'invention la structure 1 méca-thermique telle que décrite précédemment est élaboré à partir d'un procédé comprenant une première étape de fabrication de la structure 1 méca-thermique, une deuxième étape de fabrication du conduit 4 et une troisième étape d'insertion du conduit 4 dans le trou 2 de la structure méca-thermique. La méthode de fabrication de la structure 1 méca-thermique est la fabrication additive.

Cette méthode est un procédé de fabrication additive par fusion sélective de poudre déposée couche par couche. Après chaque couche déposée un faisceau laser fond de façon sélective la poudre de façon à construire le profil de pièce désiré. Les dépôts ainsi réalisés sont maintenus dans une atmosphère inerte afin d'éviter une oxydation des couches métalliques. Ce procédé couplé à un modèle réalisé par conception assistée par ordinateur ou CAO permet de mettre en oeuvre le procédé de fabrication direct par laser ce qui permet de réaliser des pièces fonctionnelles relativement complexes. Cette technique d'élaboration permet de réaliser la structure 1 telle que décrite précédemment présentant un trou 2 et des filaments extrêmement fins et nombreux sur les parois 1bis du trou 2 permettant le transfert d'énergie thermique entre le conduit 4 et la structure 1.

## Revendications

1. Structure (1) méca-thermique métallique monolithique adaptée pour un environnement spatial, comprenant au moins un trou (2), **caractérisée en ce que** le trou comprenant des parois (1bis) tapissées de filaments (3).

2. Structure (1) selon la revendication 1, dans laquelle le trou (2) comprend un conduit (4).

3. Structure (1) selon la revendication 2, dans laquelle les filaments (3) ont une longueur supérieure à une distance séparant l'extérieur du conduit (4) de l'intérieur du trou (2) de manière à se courber lorsque le conduit (4) est introduit.

4. Structure (1) selon la revendication 2 ou 3, dans laquelle le conduit (4) est un conduit thermique à ammoniaque.

5. Structure selon l'une des revendications précédentes, dans laquelle les parois (1bis) comprennent entre 30 et 100 filaments (3) par centimètre carré.

6. Structure (1) selon l'une des revendications précédentes, dans laquelle le pourcentage de surface recouverte des parois (1 bis) par les filaments (3) est compris entre 10 et 50 %.

7. Structure (1) selon l'une des revendications précédentes, dans laquelle la longueur des filaments (3) est comprise entre 0,2 et 5 mm.

8. Structure (1) selon l'une des revendications précédentes, dans laquelle le diamètre d'un filament (3) est compris entre 0,3 et 0,8 mm.

9. Structure (1) selon l'une des revendications précédentes, dans laquelle la structure comprend de l'aluminium.

10. Structure (1) selon l'une des revendications précédentes, dans laquelle les parois (1bis) sont recouvertes d'une graisse permettant une meilleure conduction thermique.

11. Procédé d'élaboration d'une structure (1) selon l'une des revendications 2 à 10, **caractérisé en ce qu'**il comprend une première étape de fabrication de la structure (1) méca-thermique par une méthode de fabrication additive, une deuxième étape de fabrication du conduit (4) et une troisième étape d'insertion du conduit (4) thermique à l'intérieur du trou (2) de la structure (1) méca-thermique.

12. Procédé selon la revendication 11, dans lequel le conduit (4) est fabriqué par une méthode d'extrusion.

13. Procédé selon la revendication 11 ou 12, comprenant en outre une étape d'enduction des parois (1 bis) du trou (2) de la structure (1) méca-thermique par de la graisse.

## Patentansprüche

1. Monolithische, thermomechanische Metallstruktur (1) für eine Weltraumumgebung, die wenigstens ein Loch (2) aufweist, **dadurch gekennzeichnet, dass** das Loch mit Fäden (3) bedeckte Wände (Ibis) aufweist.

2. Struktur (1) nach Anspruch 1, wobei das Loch (2) ein Rohr (4) aufweist.

3. Struktur (1) nach Anspruch 2, wobei die Länge der Fäden (3) größer ist als eine Distanz, die die Außenseite des Rohrs (4) von der Innenseite des Lochs (2) trennt, so dass sie sich biegen, wenn das Rohr (4) eingeführt wird.

4. Struktur (1) nach Anspruch 2 oder 3, wobei das Rohr (4) ein Ammoniakwärmerohr ist.

5. Struktur nach einem der vorherigen Ansprüche, wobei die Wände (Ibis) 30 bis 100 Fäden (3) pro Quadratzentimeter aufweisen.

6. Struktur (1) nach einem der vorherigen Ansprüche, wobei der von den Fäden (3) bedeckte Prozentanteil des Oberflächenbereichs der Wände (Ibis) zwischen 10 und 50 % liegt.

7. Struktur (1) nach einem der vorherigen Ansprüche, wobei die Länge der Fäden (3) zwischen 0,2 und 5 mm liegt.

8. Struktur (1) nach einem der vorherigen Ansprüche, wobei der Durchmesser eines Fadens (3) zwischen 0,3 bis 0,8 mm liegt.

9. Struktur (1) nach einem der vorherigen Ansprüche, wobei die Struktur Aluminium umfasst.

10. Struktur (1) nach einem der vorherigen Ansprüche, wobei die Wände (Ibis) mit einem Fett bedeckt sind, das eine bessere Wärmeleitung ermöglicht.

11. Verfahren zum Erzeugen einer Struktur (1) nach einem der Ansprüche 2 bis 10, **dadurch gekennzeichnet, dass** es einen ersten Schritt des Herstellens der thermomechanischen Struktur (1) mit einem additiven Herstellungsprozess, einen zweiten Schritt des Herstellens des Rohrs (4) und einen dritten Schritt des Einfügens des Wärmerohrs (4) in das Loch (2) der thermomechanischen Struktur (1) beinhaltet.

12. Verfahren nach Anspruch 11, wobei das Rohr (4) mit einer Extrusionsmethode hergestellt wird.

13. Verfahren nach Anspruch 11 oder 12, das ferner einen Schritt des Beschichtens der Wände (Ibis) des Lochs (2) der thermomechanischen Struktur mit Fett beinhaltet.

## Claims

1. A monolithic metallic thermo-mechanical structure (1) adapted for a space environment, comprising at least one hole (2), **characterised in that** said hole comprises walls (Ibis) covered with filaments (3).

2. The structure (1) according to claim 1, wherein said hole (2) comprises a pipe (4).

3. The structure (1) according to claim 2, wherein the length of said filaments (3) is greater than a distance that separates the outside of said pipe (4) from the inside of said hole (2) so as to bend when said pipe (4) is introduced.

4. The structure (1) according to claim 2 or 3, wherein said pipe (4) is an ammonia heat pipe.

5. The structure according to any one of the preceding claims, wherein said walls (Ibis) comprise between 30 and 100 filaments (3) per square centimetre.

6. The structure (1) according to any one of the preceding claims, wherein the proportion of the surface area of said walls (Ibis) that is covered by said filaments (3) is between 10 and 50%.

7. The structure (1) according to any one of the preceding claims, wherein the filaments (3) are between 0.2 and 5 mm long.

8. The structure (1) according to any one of the preceding claims, wherein the diameter of a filament (3) is between 0.3 and 0.8 mm.

9. The structure (1) according to any one of the preceding claims, wherein said structure comprises aluminium.

10. The structure (1) according to any one of the preceding claims, wherein said walls (Ibis) are covered with a grease that allows better thermal conduction.

11. A method for producing a structure (1) according to any one of claims 2 to 10, **characterised in that** it comprises a first step of manufacturing said thermo-mechanical structure (1) using an additive manufacturing process, a second step of manufacturing said pipe (4) and a third step of inserting said heat pipe (4) into said hole (2) of said thermo-mechanical structure (1).

12. The method according to claim 11, wherein said pipe (4) is manufactured using an extrusion process.

13. The method according to claim 11 or 12, further comprising a step of coating said walls (Ibis) of said hole (2) of said thermo-mechanical structure with grease.
